(19) Europäisches Patentamt
European Patent Office
Office européen des brevets

(11) **EP 3 415 868 A2**

(12) **EUROPEAN PATENT APPLICATION**

(43) Date of publication:
**19.12.2018 Bulletin 2018/51**

(51) Int Cl.:
**G01C 21/20** (2006.01) **G05D 1/00** (2006.01)
**G05D 1/02** (2006.01) **G05D 1/10** (2006.01)
**G08G 5/00** (2006.01)

(21) Application number: **18188156.6**

(22) Date of filing: **14.07.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(62) Document number(s) of the earlier application(s) in accordance with Art. 76 EPC:
**15382365.3 / 3 118 578**

(71) Applicant: **The Boeing Company**
**Chicago, IL 60606-2016 (US)**

(72) Inventors:
• **VALLS HERNANDEZ, ERNESTO**
**28042 MADRID (ES)**

• **NAVARRO FELIX, FRANCISCO A.**
**28042 MADRID (ES)**
• **SANCHEZ TAMARGO, DAVID**
**28042 MADRID (ES)**
• **QUEREJETA MASAVEU, CARLOS**
**28042 MADRID (ES)**
• **CUADRADO SÁNCHES, Jesus**
**28042 MADRID (ES)**

(74) Representative: **Carvajal y Urquijo, Isabel et al**
**Clarke, Modet & Co.**
**Suero de Quiñones, 34-36**
**28002 Madrid (ES)**

Remarks:
This application was filed on 09-08-2018 as a divisional application to the application mentioned under INID code 62.

(54) **METHOD AND SYSTEM FOR AUTONOMOUS GENERATION OF SHORTEST LATERAL PATHS FOR UNMANNED AERIAL SYSTEMS**

(57) A method of autonomous generation of shortest lateral path for Unmanned Aerial Systems (UAS) comprising the steps of receiving an initial scenario defined in cartographic coordinates with at least one No Flight Zone (NFZ); estimating a computation time for obtaining the shortest lateral path that avoids the at least one NFZ and checking that the estimated computation time is minor or equal than a required computation time previously provided; determining a safety area surrounding each individual NFZ; constructing a visibility graph that comprises all the possible lateral paths between the Source point and the Target point avoiding the NFZs; and determining the shortest lateral path among all the possible lateral paths. A system of autonomous generation of shortest lateral path for UAS is also provided.

FIG. 13

**Description**

## BACKGROUND

The present disclosure relates to a method and a system for autonomous generation of shortest lateral paths for Unmanned Aerial Systems (UAS) that avoids No-Flight Zones (NFZs). The disclosure proposes a safe, practical and robust solution for autonomously generating geodetic pseudo-optimal lateral paths for UAS avoiding NFZs and taking into account computational time requirements and computational capabilities needed to obtain the best possible solution in the required time at real time. The method underlies an effective sequence of steps that smartly combine heuristic, geodetic and geometric algorithms to provide an efficient and robust solution for most common UAS scenarios.

Autonomous generation of UAS flight lateral paths with no intervention from remote pilot still represents a major challenge in UAS. Limited onboard computational capabilities, high complexity of geodetic scenarios plenty of NFZs and crowded airspace are some of the issues that still makes this problem difficult to cope with. Scenarios in the UAS domain are frequently plenty of geodetic NFZ polygons that can be located anywhere in the world, with any extension, with very complex shapes being defined by large number of vertices. For instance, boundaries of the most common geographic features like cities or airports are commonly considered as NFZs. This makes that the geodetic identification of the shortest path in extensive areas on the earth's surface avoiding NFZs poses some issues that other existing solutions do not addressed.

Some of the specific issues associated with the generation of a shortest lateral path for UAS are the following:

- each particular UAS platform has specific performances and limitations that have to be considered in order to provide safe and flyable trajectories;
- the predictability of the vehicle motion and, thus, its position accuracy are subjected to high uncertainties;
- UAS scenarios usually comprise a large number of NFZs with complex geometries that require high computational resources and time to be executed, especially under the limited computational resources of the common UAS onboard computers. In addition, the operational real-time requirements of the UAS missions are also limited; and,
- UAS operational scenarios are located anywhere in the world and may have any extension. Defining scenarios on geodetic datum (e.g. WGS84) increases the complexity of the shortest lateral path solution. Try to solve the complete geodetic problem in ellipsoidal geometry would require complex geodetic algorithms and high computational requirements.

The disclosure herein described considers the cited problems associated to the particularities of the autonomous trajectory definition in UAS operational scenarios and provides an autonomous definition of a geodetic pseudo-optimal shortest lateral path for UAS avoiding NFZs, that can be defined anywhere in the world and have any geographical extension. Furthermore, the disclosure provides the best possible result within a required time range. The solution grants a safe and robust UAS trajectory and provides a good balance between computational efficiency and solution accuracy.

## SUMMARY

To achieve the advantages and avoid the drawbacks listed above, the present disclosure provides a significant improvement over existing solutions since it describes a method and a system for autonomous generation of shortest lateral paths for Unmanned Aerial Systems (UAS) avoiding No-Flight Zones (NFZs) that takes into account computational time requirements and computational capabilities to obtain the best possible solution in real time. The NFZs are territories or areas over which aircraft are not permitted to fly.

So, a first aspect of the present disclosure is a method of autonomous generation of shortest lateral path for Unmanned Aerial Systems (UAS), wherein a constant Turn Radius (TR) and a constant vertical path of a UAS platform is previously defined. The method comprises the steps of:

a) receiving an initial scenario defined in cartographic coordinates, the initial scenario comprising a Source point and a Target point that define a vector representing an initial flight intention of the UAS platform and at least one No Flight Zone (NFZ) ;

b) estimating a computation time for obtaining the shortest lateral path that avoids the at least one NFZ, the required computation time being directly proportional to an overall number of vertex of the at least one NFZ and checking that the estimated computation time is minor or equal than a required computation time previously provided;

c) determining a safety area surrounding each individual NFZ, wherein the safety area is defined by an offset distance;

d) constructing a visibility graph that comprises all the possible lateral paths between the Source point and the Target point avoiding the NFZs, the possible lateral paths being all possible combinations of vectors connecting the vertices of the safety zones; and

e) determining the shortest lateral path among all the possible lateral paths generated in step d).

Advantageously, when the initial scenario is defined in geodetic coordinates instead of cartographic coordinates, the method:

- defines a cartographic projection of the initial scenario considering a geometric extension and a geographic location of the initial scenario; and
- translates the initial scenario defined in geodetic coordinates into an equivalent initial scenario defined in cartographic coordinates by applying the defined cartographic projection to the initial scenario defined in geodetic coordinates.

Advantageously, in order to reduce the complexity of the lateral path calculation, the method:

- determines a Configuration Space as an area delimited by two perpendicular lines, each perpendicular line passing through the Source and Target points respectively, to the initial flight intention vector; and,
- discards any NFZ located outside the Configuration Space.

More advantageously, when at least one NFZ has been discarded and at least one of the NFZs is located inside the Configuration Space, the method further comprises executing steps b) to e) considering only the NFZs inside the Configuration Space.

Advantageously, the method estimates a scale factor for each point of the scenario that is introduced by the translation of the initial scenario defined in geodetic coordinates into the equivalent initial scenario defined in cartographic coordinates. This scale factor is a variable parameter that depends on the longitude and latitude values of the different points of the geodetic scenario and represents a measure of the distortion introduced by the cartographic projection.

More advantageously, the method checks that the Source and Target points are located outside any surrounding safety areas of the NFZs and estimates a Projection Distortion Factor (PDF) as the minimum scale factor that ensures that the safety offset distance is always equal or larger than a minimum safety distance. This PDF will be the scale factor that assures that none of the safety offset distances in the defined cartographic plane will be lesser than a minimum safety distance established in the geodetic ellipsoid.

Advantageously, when the estimated computation time exceeds the required computation time, the method reduces the total number of vertices of the safety areas by applying a vertex reduction algorithm to each safety area. Preferably this vertex reduction algorithm is selected between a minimum bounding box algorithm and a linear simplification algorithm. When the linear simplification algorithm is selected, the method applies a tailored Douglas-Peucker algorithm to each NFZ determining a maximum Linear Distance (LD) that corresponds to a largest simplification distance between each original NFZ or the corresponding simplified NFZ.

Advantageously, the Offset Distance employed in step c) for determining the safety area is calculated by the following expression:

$$\text{Offset distance} = \text{PDF} \times (\text{TR} + \text{PU})$$

wherein PDF is the Projection Distortion Factor, TR is the Turn Radius of the UAS platform and PU is a Position Uncertainty value of the UAS platform. If the linear simplification algorithm is applied to the safety areas, the Offset Distance is calculated by the following expression

$$\text{Offset distance} = \text{PDF} \times (\text{TR} + \text{PU} + \text{LD})$$

wherein LD is the maximum Linear Distance.

Optionally, a constant safety area may be introduced in order to increase the security distance between the UAS and the NFZs, so the offset distance would be calculated by the following expression:

$$\text{Offset distance} = \text{PDF} \times (\text{TR} + \text{PU} + \text{LD} + \text{CD})$$

wherein CD is the Constant Safety Distance added to the Offset Distance.

Optionally, if the initial scenario is directly provided in cartographic coordinates, so there is no need of a cartographic projection, the offset distance will be calculated as the sum of the Turn Radius plus the Position Uncertainty value and eventually plus the Constant Safety Distance and/or the Linear Distance.

Advantageously, step c) of the method comprises cutting bevel edges of angled portions of the safety areas, where the angled portions have an angle less than a predefined angle threshold. Preferably, the angle threshold might be any possible angle between 0 and 90 degrees.

More advantageously, step c) further comprises merging overlapped safety areas of contiguous NFZs.

More advantageously, step c) further comprises applying a convex hull algorithm to the safety areas for simplifying the resulting NFZ polygons.

In another aspect, the present disclosure provides a system for autonomously generating shortest lateral path for UAS that avoids NFZs. The system comprises:

- an autonomous lateral path generator configured to receive an initial scenario in cartographic coordinates, the initial scenario comprising at least one NFZ and a source and a target point that determine an initial flight intention vector of the UAS platform;
- means for determining an estimated computation time for obtaining the shortest lateral path avoiding the NFZs, said computation time being directly proportional to an overall number of vertex of the NFZs, and checking that the estimated computation time is minor or equal than a required computation time previously provided;
- means for determining an offset distance, creating a safety area surrounding each NFZ wherein the safety area is defined by the safety offset distance and redefining the perimeter of each NFZ by including such safety area;
- means for creating a visibility graph with all possible lateral paths between the initial and target points that avoid the redefined NFZs, the possible lateral paths being all possible combinations of vectors connecting the vertices of the safety areas; and
- the lateral path generator being further configured to determine the shortest lateral path among all generated lateral paths.

Advantageously, the system comprises means for defining a cartographic projection of the initial scenario defined in geodetic coordinates and translating said initial scenario into an equivalent initial scenario defined in cartographic coordinates by applying the cartographic projection to the initial scenario.

Advantageously, the system further comprises means for determining a configuration space as an area delimited by two perpendicular lines, each perpendicular line passing through the Source and Target points respectively, to the initial flight intention vector; and means for identifying and discarding any NFZ located outside the Configuration Space.

Advantageously, the system comprises means for estimating an scale factor introduced by the translation of the initial scenario defined in geodetic coordinates into the initial scenario defined in cartographic coordinates.

Advantageously, the system comprises means for checking that the Source and Target points are located outside any safety area and means for estimating a Projection Distortion Factor as the minimum scale factor that ensures that the safety offset distances are always equal or larger than a minimum safety distance.

Advantageously, the system comprises means for reducing a total number of vertices of the NFZs by applying a vertex reduction algorithm to each NFZ. Said vertex reduction algorithm will be preferably selected between a bounding box algorithm and a linear simplification algorithm.

Some of the advantages of the present disclosure against existing prior art are:

- Most of the existing solutions assume well-known scenarios in planar coordinates or do not consider geodetic issues related to distortions. Thus, such existing solutions provide a simplification of the technical problem herein described. The present disclosure works with geodetic scenarios and considers issues related with distortions in order to provide a more accurate solution. To do that, the disclosure autonomously selects the cartographic projection that better reduces the distortion factors. This is a technical difference with existing solutions.
- The proposed system and method allow handling any type of geometric scenarios with no limitation regarding their extension, number of NFZ polygons, shape or location of both the NFZs and the Source and Target points.
- The method also includes a clipping task to select the NFZs directly related to the shortest path problem. This is a novel solution to reduce the complexity of the scenarios.
- The proposed system and method considers as input a computational time requirement in which a possible resulting path has to be found. Then, it estimates the expected computation time for the input scenario and decides a simplification strategy to meet such time requirement. As a consequence, a pseudo-optimal shortest path is obtained. The existing solutions do not consider a computational time requirement, which is an important drawback that could put at risk the UAS mission.
- Assumptions about the scenario have been reduced as much as possible in order to provide a robust solution for any scenario. Contrarily, most of existing solutions assume different simplifications: i) they consider input scenarios as local planar scenarios in order to get rid of the complexity because of geodetics and cartography; ii) the configuration space is usually well identified from scratch; iii) they assume polygons directly related to the shortest path problem are clustered in limited areas; iv) they assume small number of simple polygons (defined by a few vertices).

- Existing solutions do not provide a robust autonomous solution for any geographic scenario. This is an important limitation, particularly in UAS missions in which the flexibility to autonomously address different operational scenarios is really important. Existing solutions normally require some human tasks to conveniently prepare each operational scenario according to the mission requirements. The disclosure overcomes this limitation by the autonomous preparation of the scenarios to meet the mission requirements.

- The autonomous definition of the safety offset distance considers the most relevant uncertainty factors. The offset distance is calculated by the sum of two components, a constant one provided by the user and a second one internally calculated by the method. This way, the method ensures no invasion of NFZs and fits better the Configuration Space, making the method more efficient, robust and safe. In contrast, current solutions typically work with a constant offset value that is initially estimated by users.

- The disclosure increases the automation, efficiency and safety of UAS operations in cases where lateral path definition is required. Minimum human intervention or even no intervention is needed to define pseudo-optimal shortest paths, which is significantly relevant in critical situations (e.g. critical failure onboard). This problem would neither be easily approachable nor optimally solved by human operators without automation support.

- Reduction of environmental impact. The shortest path is generally associated to the most efficient path in terms of fuel consumption. Furthermore, potential risk of incursion in natural protected areas can be reduced if they are included as NFZs.

- To address the issue of the existence of specific performances and limitations in the UAS, the method assumes: i) the turn radius of the UAS will be initially defined and will be constant during the execution of the shortest path (e.g. the worst case turn radius of the UAS platform may be considered) and; ii) the vertical path of the UAS will be constrained to safe and constant altitudes.

In order to achieve the aforementioned solution, the present disclosure adds safety margins to avoid NFZs incursions in order to reduce the high uncertainties associated with the motion predictability and position accuracy of the UAS.

It also reduces the complexity of the scenario avoiding computation time limitations, in order to provide the best possible solution into the required time range.

It translates the geodetic scenario into a planar one reducing the complexity of the UAS operational scenarios. Then again, such translation produces new issues to be addressed: i) distorted planar NFZs and; ii) increases the uncertainty of the UAS's geodetic location. To address such issues, the disclosure reduces the distortion into reasonable values and takes them into account in the overall solution.

Some of the applications or uses of the proposed method and system may be: advanced UAS autonomous contingency management functions such as Return-Home, Lost-Link, Engine-Out and Sense&Act capable of avoiding NFZs in an efficient and robust way and Ground Control Stations (GCS) to support the remote pilot in the modeling of lateral flight paths for UAS operations. Besides UAS applications, the method may be also valuable in the ATM domain, for trajectory planning and procedure design purposes as well as a baseline algorithm for dynamic trajectory management automation tools such as conflict resolution.

## BRIEF DESCRIPTION OF THE FIGURES

Figure 1. Shows a flow diagram of a particular embodiment of the method for autonomous generation of shortest lateral paths for Unmanned Aerial Systems (UAS) avoiding No-Flight Zones (NFZs) . Said flow diagram represents the main steps of said method.

Figure 2. Shows a flow diagram of a particular embodiment of the sub-steps that conform the Heuristic step of Figure 1.

Figure 3. Shows a flow diagram of a particular embodiment of the sub-steps that conform the Geodetic Layout Transformation step of Figure 1.

Figure 4. Shows a flow diagram of a particular embodiment of the sub-steps that conform the Complexity Reduction step of Figure 1.

Figure 5. Shows a flow diagram of a particular embodiment of the sub-steps that conform the No-Flight Zones Incursion step of Figure 1.

Figure 6. Shows a flow diagram of a particular embodiment of the sub-steps that conform the Lateral Path Definition step of Figure 1.

Figure 7. Shows a particular embodiment of a scenario in which the SPCS has been defined. Figure 7a shows the geodetic scenario and Figure 7b shows the same scenario projected in cartographic coordinates.

Figure 8. Shows a particular embodiment of a scenario to which a simplification strategy is applied. Specifically, Figure 8a shows the bounding box strategy application and Figure 8b shows the linear simplification strategy application.

Figure 9. Shows the application of the cutting bevel edge strategy to a particular NFZ.

Figure 10. Shows a particular embodiment in which two NFZs are overlapped.

Figure 11. Shows the merging strategy applied to the particular embodiment of Figure 10.

Figure 12. Shows particular cases in which the convex hull algorithm cannot be applied. Specifically, Figure 12a shows a case in which as result of the convex hull algorithm application a potential path would be discarded discarded and Figure 12b shows a case in which the target point would be discarded.

Figure 13. Shows a particular embodiment in which the Visibility Graph algorithm is applied to a particular Configuration Space (SPCS) including 3 NFZs.

Figures 14 to 19. Show a particular embodiment in which the method of the present disclosure is applied to a particular geodetic scenario.

## DETAILED DESCRIPTION

Next, a description of several examples of particular embodiments of the present disclosure is carried out, with illustrative character and without limitation, making reference to the numbering used in the figures.

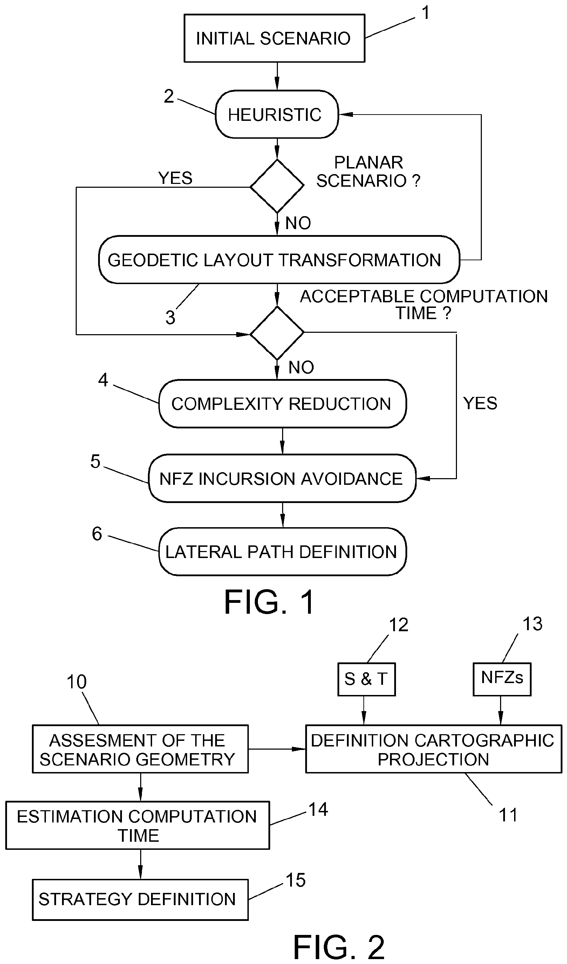

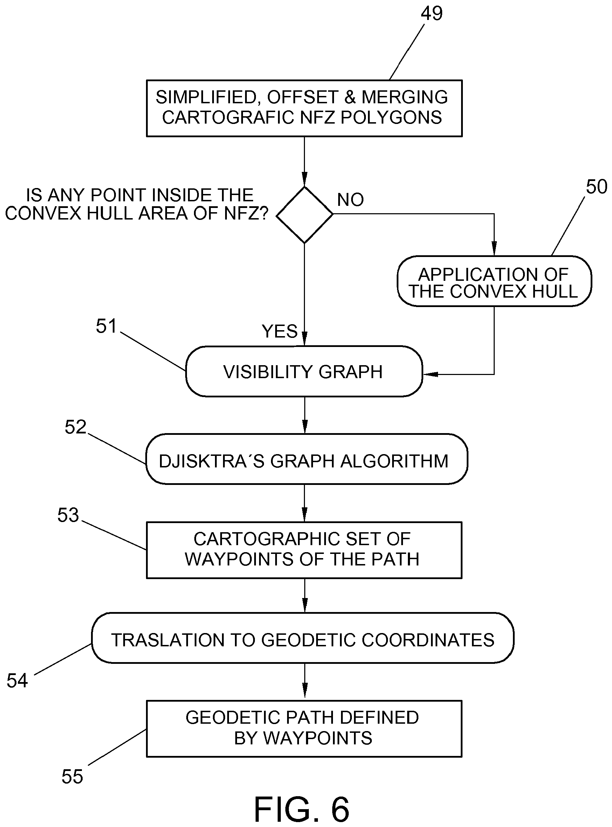

In a particular embodiment of the disclosure, the method is constituted by five main well-distinguished steps that are shown in the flow diagram of Figure 1. Figures 2 to 6 show the corresponding sub-steps of each main step.

Once an initial scenario (1) is provided, said initial scenario (1) corresponding to a particular UAS operational scenario with a specific location and extension, the first main step of the method is the "Heuristic step" (2). The Heuristic step (2) assesses the initial scenario (1) in order to define the best strategy to find a feasible solution that provides a good compromise between computation time and accuracy of the final lateral path. As shown in figure 2, the Heuristic step (2) comprises three sub-steps:

The first sub-step is the Assessment of the Scenario Geometry (10). This sub-step gets some geometric information, comprising the Source (departure) and Target (destination) points (S&T) (12) and the existing NFZs (13), from the initial scenario (1) in order to identify the cartographic projection (11) that best reduces distortions at the overall scenario. Initially, most of the scenarios are usually defined in geodetic coordinates on the earth's surface and contains all the NFZs, including those NFZs not directly related to the Shortest Path Configuration Space (SPCS) . The SPCS is defined as the area of interest of the overall initial scenario. However, NFZs outside the SPCS, assuming that they exist, must be clipped to get more accurate estimation of the cartographic parameters. This clipping will be executed once the scenario has been translated into a cartographic plane (by means of the cartographic projection) in the ensuing first sub-step of the second main step. Thus, the Heuristic step (2) makes a preliminary estimation of the scenario location and its geometric extension based on all the NFZs and, optionally, it will make a second estimation once the clipping has been completed. Based on the geometric information obtained, the Heuristic step (2) defines a cartographic projection (11) that will be used in the Geodetic Layout Transformation (3) step to translate the original and clipped geodetic scenario into a cartographic one. At the end of the Assessment sub-step (10), the parameters needed to define an optimal cartographic projection (11) for each scenario are identified. For instance, scenarios with NFZs located in up to 10° to both sides of S&T segment (a segment joining points S&T) may be projected through a simple Oblique Mercator Projection; however, this projection cannot be directly applied on global scenarios (NFZs located further than 10° from the S&T segment) because distortion would be larger than expected.

The second sub-step is the Estimation of the Computation Time (14). Based on previous analysis of different scenarios, some internal functions are built to estimate the overall computation time of the method execution for each particular scenario. Such computation time depends mainly on: i) the number of NFZs that will be potentially involved in the SPCS; ii) the efficiency of the implemented algorithms and; iii) the computational resources. Although these parameters are not constants, they are precisely estimated in order to define the internal function that will estimate the expected computation time.

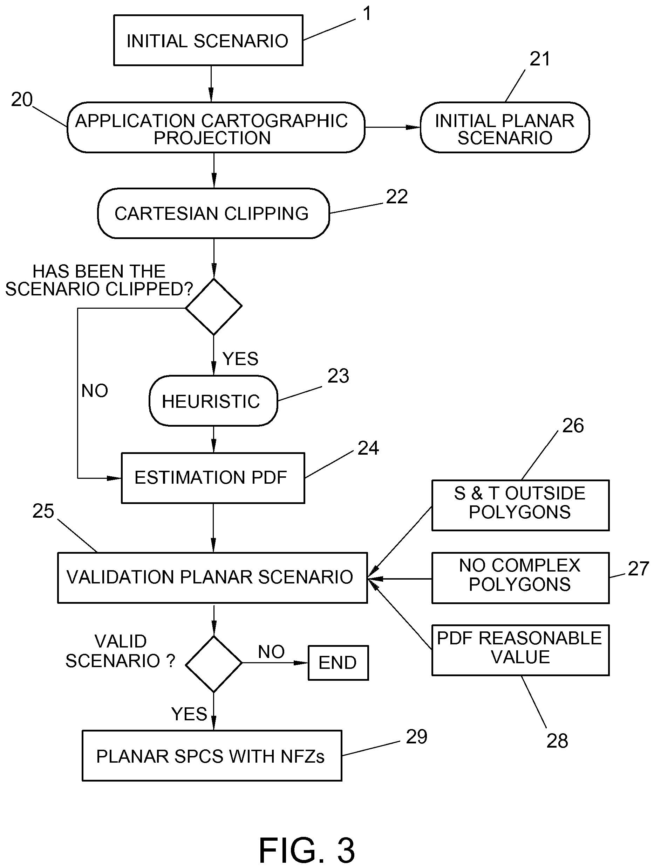

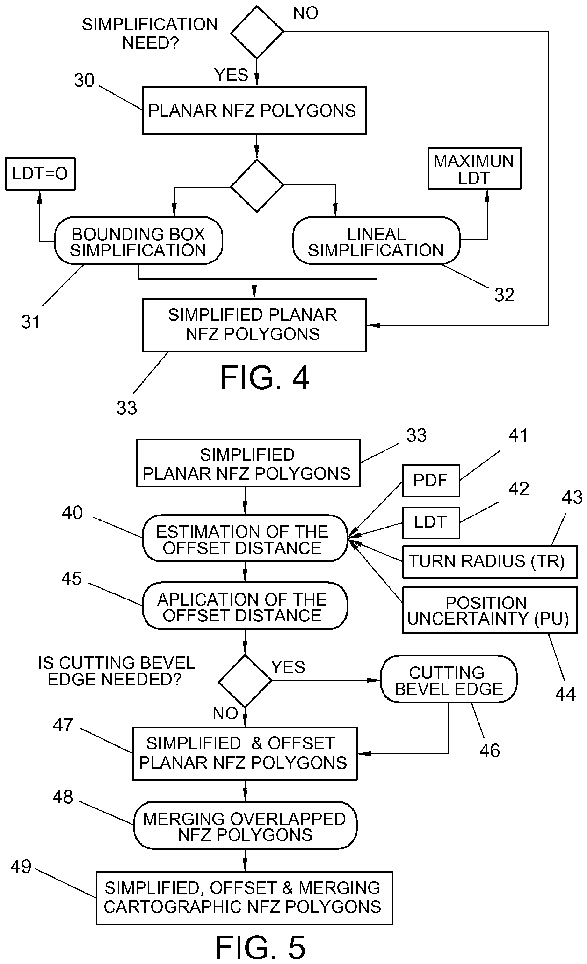

The third sub-step is the Strategy Definition (15). This sub-step (15) considers the estimated computation time previously obtained and the computation time requirements (if they has been previously defined) and finds a feasible solution to meet such time. If the estimated time is longer than required, so the estimated computation time is not acceptable, a Complexity Reduction step (4) over the NFZs must be carried out as it is stated in Figure 3. If the Complexity Reduction step (4) is needed, the Heuristic step (1) selects the best complexity reduction strategy in order to meet the required computation time. The complexity reduction of the scenario implies reducing the accuracy of the final path because some of the vertex that define the original NFZs will be removed from the scenario. Hence, the Heuristic (2) balances the computation time against the loss of accuracy in the final lateral path. Depending on the scenario and the context where the method is applied, a faster solution may be preferred instead of a more accurate and slower one (thus, Bounding Box or Linear simplification strategy must be selected by the Heuristic, see Figure 4).

The second main step of the method is the Geodetic Layout Transformation (3). Scenarios are usually defined in geodetic coordinates on the earth's surface, although they may be also provided in Cartesian coordinates. This step is optional since it is only executed if the initial scenario (1) is provided in geodetic coordinates. Solving the shortest lateral path problem on geodetic coordinates would require high computational resources. Hence, the solution must be found in a planar domain. The Geodetic Layout Transformation step (3) translates the initial geodetic scenario (1) into a Cartesian one and makes an estimation of the Projection Distortion Factor (PDF). Figure 3 shows the sub-steps of this step (3):

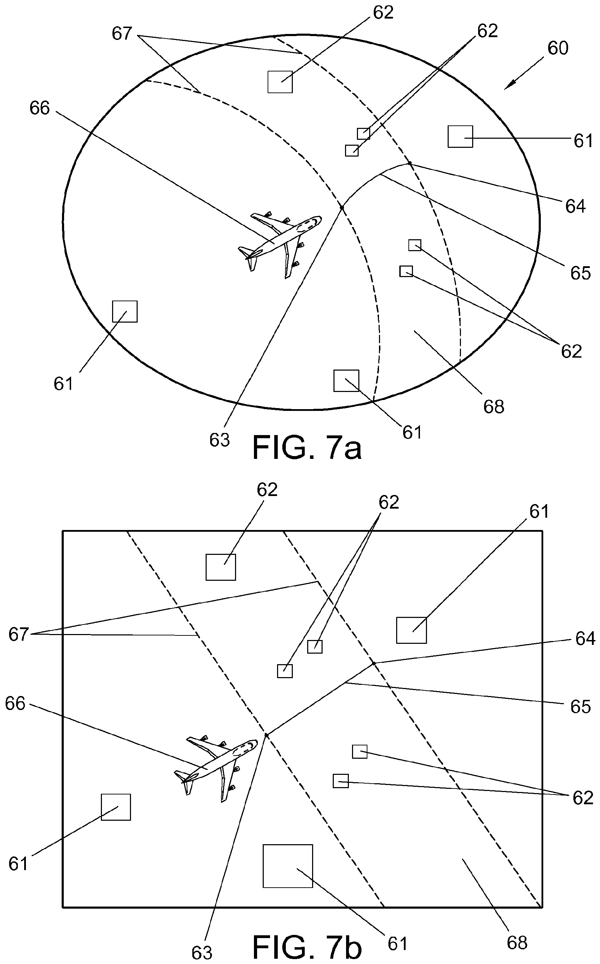

The first sub-step is the Application of the Cartographic Projection (20). This sub-step (20) applies the cartographic projection defined in the Heuristic step (2) to the overall initial scenario (1) in order to translate it into the Cartesian coordinates of the corresponding projection. The result is an initial planar scenario (21). Figure 7a shows a particular example of a geodetic scenario (60) comprising a plurality of NFZs (61,62) and an UAS (66) flying from a source (63) to a target point (64). The S&T segment (65) joins, in geodetic coordinates, both points (63,64). Figure 7b shows the cartographic translation of the geodetic scenario of Figure 7a into Cartesian coordinates.

The second sub-step is a Cartesian Clipping (22) applied on the initial planar scenario (21). This clipping allows defining the SPCS as the area that is only made up by the NFZ polygons potentially involved in the shortest lateral path definition. To identify such polygons, the method assumes that: i) it is possible to consider geodetic lines on the cartographic plane as straight segments (instead of being curves), because the PDF is kept under certain tolerance value; and ii) the cartographic projection used is conformal (angles on the earth's surface are preserved on the plane). These assumptions allow reducing the complexity of the clipping problem. As derived from figure 7, the S&T segment (65) is considered as a straight segment and it is effortless to define the two perpendicular lines (67) that pass through S&T points (63,64). Those lines define the approximated earth's slice that encloses the SPCS (68). Since the method is designed for UAS that always flying from the Source to the Target points, NFZs (61) behind those lines (67) may be disregarded. As a result, remote NFZs (61) are discarded from the original scenario and then, the initial number of NFZs polygons is reduced and the extension of the scenario is changed. Hence, the initial estimations made by the Heuristic step (2) must be updated.

If the scenario results clipped and the number of NFZs reduced (by deleting those NFZs located outside the SPCS), a second invocation of the Heuristic step (23) must be done to update the cartographic parameters and the estimated computation time of the scenario based on the new projected and clipped scenario. Contrarily, if there are not NFZs located outside the SPCS and therefore the number of NFZs remains equal before and after the cartesian clipping (22), the method directly passes to the Estimation of the Projection Distortion Factor (PDF) sub-step (24) .

The Estimation of the PDF sub-step (24) gets information about the maximum distortion produced on the NFZs by the cartographic projection. Depending on the location of the NFZ polygons in the cartographic projection plane, the distortion factor may be equal, greater or less than one. Among them, distortion factors greater than one are considered relevant for the method since distance measures on the cartographic plane will be a shortest geodetic distance on the earth's surface. For instance, 1 meter measure on the plane considering a PDF of 1.0001 will correspond to 0.9999 meters on the earth's surface. Therefore, the PDF must be taken into account to define the safe distance in the NFZ incursion avoidance step (5) in order to prevent a resulting safe distance on the earth's surface shortest than expected.

Once the SPCS has been defined (optionally it could be even more precisely defined in the second iteration of the Heuristic step (23)) and the PDF has been estimated (24), next sub-step is the Validation of the Cartesian Scenario (25). The scenarios must meet some specific requirements to be potentially computable by the shortest path algorithm. This sub-step (25) firstly checks whether the Source and Target points are inside of any NFZ polygon (26). If any of the S&T point is inside of any polygon, then there is not any possible lateral path that does not violate the NFZs and the method would not be applicable. Secondly, the method checks the geometry of the projected NFZs polygons (27). The geometry cannot be complex in the sense that polygons with holes or self-intersection polygons are not supported. If the complexity of the polygons is high, the method may apply a conventional simplification algorithm to the NFZ contours. Thirdly, the method checks whether the PDF has a reasonable value (28) and the distortion for the specific scenario is feasible. To perform this last validation, a PDF threshold is previously established so obtained PDF is compared with the predefined PDF. At the end of the validation sub-step (26), the outcome will be the portion of the planar scenario corresponding to the SPCS including a set of NFZ planar polygons inside said SPCS.

The third main step of the method shown in Figure 1 is the Complexity Reduction (4). The overall number of vertices that defines the NFZs is critical to get an optimal solution in a required response time. The complexity reduction step (4) applies different vertex reduction strategies to simplify the geometry of the NFZ polygons in order to reduce the overall computation time in the next steps. This step (4) is only executed when the estimated computation time to obtain the shortest lateral path is higher than required. If it does not happen, then the planar NFZ polygons are directly considered as the simplified planar NFZ polygons. The reduction in the number of these vertices is translated into less accuracy on the obtained lateral path since its definition relies on the NFZ vertices. On the contrary, more precise definition of the NFZ polygons provides better path solutions at the expense of more computation time. Considering those issues, the heuristic step (2,23) makes a balance between the required computation time and the number of vertices in order to recommend a suitable reduction strategy. As shown in Figure 4, the method applies the reduction strategy over the planar NFZ polygons (30) inside the SPCS this step a set of Simplified Planar NFZ polygons (33) will be obtained. Two possible reduction strategies are then considered:

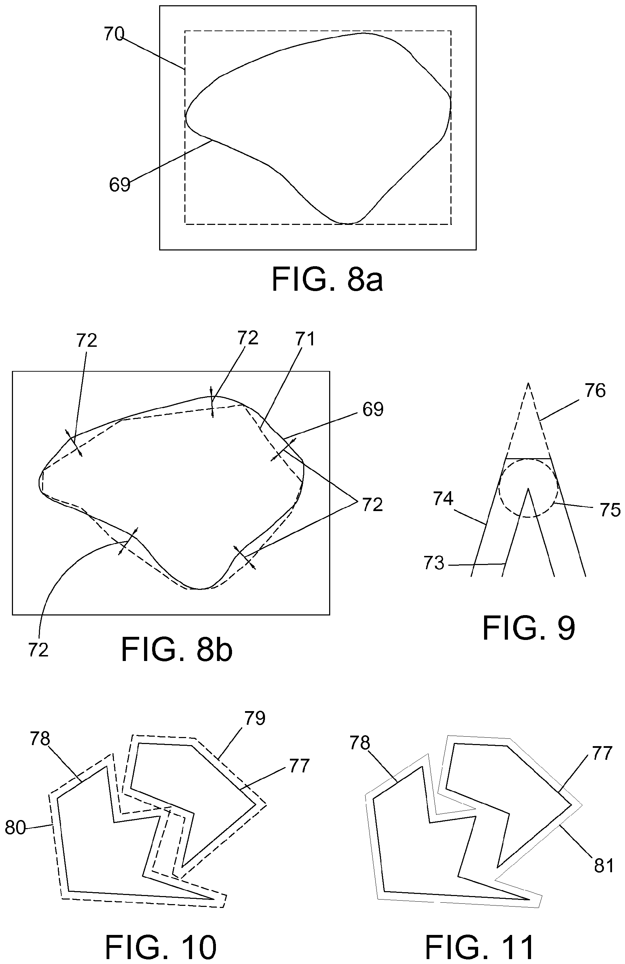

The Bounding Box simplification strategy (31) bounds all the polygons by rectangular areas reducing the number of vertices to four times the number of NFZs. This solution provides lower computation time at the expense of accuracy in the path solution. Figure 8a shows the application of the bounding box simplification strategy to a particular NFZ (69). As a result of said strategy a four side box (70) is obtained with dimensions corresponding to the longer distances of the initial planar NFZ.

Linear Simplification strategy (32) is based on a customized Douglas-Peucker algorithm. This strategy (32) uses an internal distance, which is called Linear Distance (LD), between the sides of the planar NFZ polygons (30) and the corresponding sides of the simplified Planar NFZ polygons (33), to reduce the number of vertices. Figure 8b shows the resulting simplified polygon NFZ (71) obtained applying the customized Douglas-Peucker algorithm on the same polygon NFZ (69) of Figure 8a. The method selects and keeps the maximum LD distance among the obtained linear distances (72). This approach provides a good balance between the complexity reduction, computation time and accuracy of the path. LTD is equal to 0 if the Bounding Box simplification strategy (31) is applied.

The fourth main step of the method shown in Figure 1 is the NFZ Incursion Avoidance (5). The step (5) offsets a safe distance to the Simplified Planar NFZ Polygons (33) coming from the previous step. As shown in Figure 5, this step (5) comprises the following sub-steps:

The Estimation of the Offset Distance (40) calculates a safe buffer distance to avoid NFZs incursions considering all the influence factors that could make the UAS to enter in the NFZs. Such distance is defined to prioritize no incursions on the NFZs, which implies oversize some of the influence factors to consider. Thus, the shortest paths will be conservative from a safety perspective and hence, will be pseudo-optimal regarding to the real geodetic distance. Following factors must be considered: i) The PDF (41) previously estimated distorts the real geodetic distances; thus, the offset distance measure in the plane are not realistic on the earth surface; ii) the Linear Simplification shifts the boundaries of the NFZs towards its interior, at most, the LD (42). Therefore, this -Linear Distance (LD) must be amended; iii) the worst UAS Turn Radius (TR) (43) is also a distance factor to consider; iv) the Position Uncertainty (PU) (44) of the UAS, that will mainly depend on the navigation capabilities of the UAS. Next expression gathers all these factors to estimate a safe offset distance

$$\texttt{Offset distance (OD) = PDF * (LD+TR+PU)}$$

Optionally, a Constant offset Distance (CD) may be added to ensure a minimum distance from the NFZs. In this case, the final estimation of the offset distance should be:

$$\texttt{Offset distance (OD) = PDF * (LD+TR+PU+CD)}$$

The Application of the Offset Distance (45) (shifts the NFZ polygons' boundary (73) toward their outside to the specific offset distance (OD) (75) calculated in the previous sub-step (40). It results in a set of offseted planar NFZs (74). When any of the angles of a offseted NFZ polygons (74) is very acute, they must be cut bevel (46) in order to increase the Configuration Space and do not miss potential lateral paths, as it is shown in Figure 9. The cropped area (76) leaves outside the simplified and offset planar NFZ polygons (47).

As resulting of applying the offset distance, some NFZ polygons (77,78), with their respective offset areas (79,80) surrounding them, may be overlapped as is shown in Figure 10. Then, they are merged (48) creating a new simplified NFZ polygon (49) with a single offset area (81), as is shown in Figure 11.

At the end of the NFZ incursion avoidance step (5), a set of Simplified, Offset & Merging Planar NFZ Polygons (49) are obtained.

The fifth main step of the method shown in Figure 1 is the Lateral Path Identification step (6). This step (6) finds the pseudo-optimal shortest path distance between the Source and Target points. This step (6) comprises the following sub-steps:

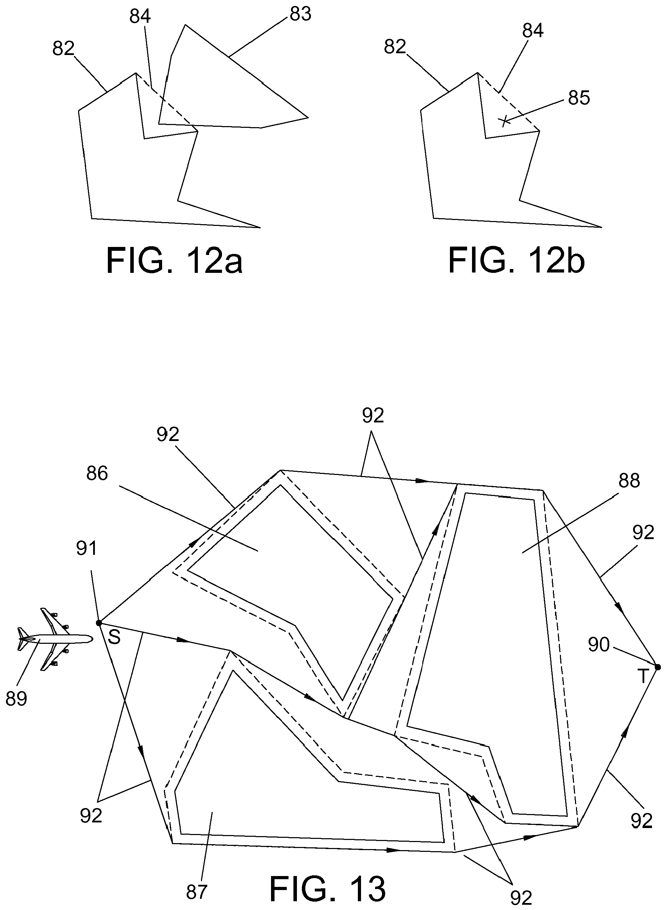

A first sub-step is the application of a Visibility Graph algorithm (51) to the SPCS to find all the possible lateral paths between the S&T points. Such algorithm finds the shortest path through the convex hull polygons' boundaries. The input for this sub-step will be the Simplified, Offset & Merging cartographic NFZ polygons (49) coming from the previous step. Therefore, the first internal sub-step is the application of a Convex Hull algorithm (50). Nevertheless, convex hull algorithm cannot be applied in cases in which the source and target points or any other point of a NFZ is enclosed within the convex hull areas of another NFZ, because in these cases potential shortest paths would be discarded. Figure 12a shows a particular case in which the Convex hull algorithm would modify (see dashed line (84)) the perimeter of NFZ1 (82) in such a way that NFZ1 (82) and NFZ2 (83) would overlap closing the space between both NFZ (82,83) discarding a potential shortest path. Figure 12b shows another particular case in which the target point (85) falls within the convex hull polygons' boundaries. So, if the convex hull algorithm is applied the method would never find a solution.

After the application of the Convex Hull algorithm (50), the Visibility Graph algorithm (51) is applied to identify all likely geometric paths between S&T points, as shown in figure 13. Said figure shows 3 Simplified, Offset & Merging cartographic NFZ polygons (86,87,88) (the dashed lines represent the offset areas surrounding the NFZs) and an UAS (89) trying to arrive to a target point (90) from a source point (91). The algorithm (51) identifies the visible connections among the overall set of points of the SPCS. If the line segment connecting two points (or locations) does not pass through any obstacle, a new edge between them is created and added to the graph. These line segments connect the S&T points with vertex of the offset areas. These line segments are represented with solid lines in Figure 13. In addition, the length of each edge is calculated (either Euclidean or Geodetic distances) and is added as an edge attribute that will be used to identify the shortest path distance.

Once the visibility graph has been built, next sub-step is the execution of Dijkstra's algorithm (52) that finds the path with lowest cost (i.e. shortest path distance) between the S&T points.

Next sub-step is the selection of the cartographic set of waypoints that defines the shortest path (53) and then, the waypoints are translated to geodetic coordinates (54) in order to define a geodetic pseudo-optimal shortest path. Finally, the geodetic path defined by waypoints will be obtained (55) and the UAS will fly the created geodetic shortest lateral path.

It must be considered that the obtained shortest lateral path is pseudo-optimal for two reasons. The first reason is because only working with planar coordinates without distortion can assure that the obtained path is the shortest one. The second reason is that the polygon simplification and offset addition necessarily introduce some distortions that will affect to the path obtained.

The method would work even when there is no NFZ inside the SPCS since the shortest lateral path will be the straight line.

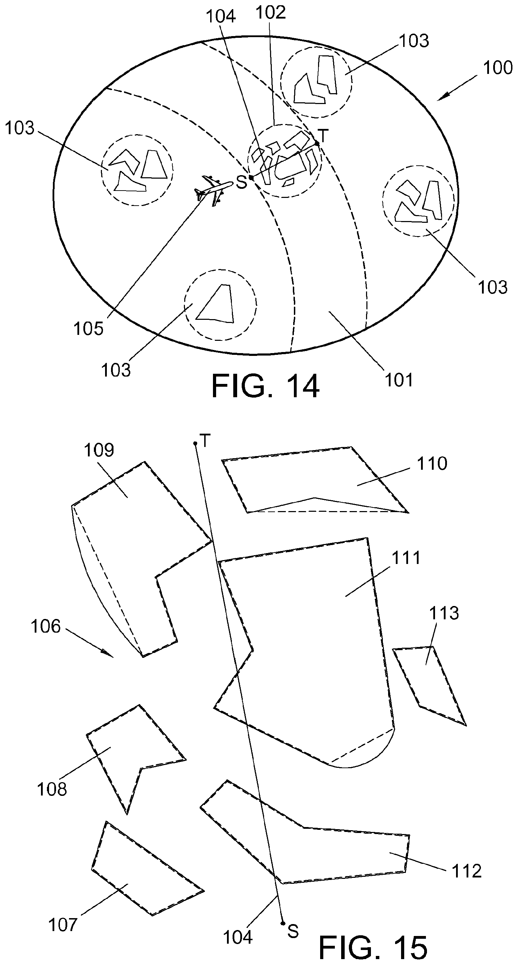

Figures 14 to 19 show a particular embodiment of the method application to a specific scenario. Said scenario (100) in geodetic coordinates, as shown in figure 14, has a SPCS (101) delimited between the Source (S) and Target (T) points, said points defining the flight intention vector (104) of, for instance, a UAS platform (105). The method firstly executes the heuristic step (2) analyzing the initial geodetic scenario (100). As a result of this heuristic step the method obtains a cartographic projection of the initial geodetic scenario (100). The SPCS (100) comprises a first set of NFZs (102) potentially involved in the lateral path solution that must be considered. There is a second set of NFZs (103) located outside the SPCS (101) that will be clipped in order to reduce the complexity of the initial geodetic scenario. After the application of the geodetic layout transformation (3) to the original geodetic scenario (1) an original cartographic scenario (106) is obtained, as shown in figure 15, said scenario (106) being focused on the NFZ (107-113) potentially involved in the lateral path solution. Since the scenario has been clipped, the second set of NFZs (103) has been discarded, the heuristic step is executed again over the clipped planar scenario (106). The method estimates a computation time that is needed to obtain a lateral path solution and compares it with a required computation time previously defined. In this case a linear simplification strategy is selected in order to reduce the estimated computation time. Then, the method calculates the PDF and checks: i) the Source and Target points are outside any NFZ, there are no complex polygons and the PDF obtained is under a predefined threshold. The selected linear simplification strategy is applied consisting in a tailored Douglas-Peucker algorithm that simplifies the polygons by reducing their number of vertices (the resulting NFZ polygons are marked with dashed lines in Figure 15). Then, the maximum linear distance (LD) is calculated.

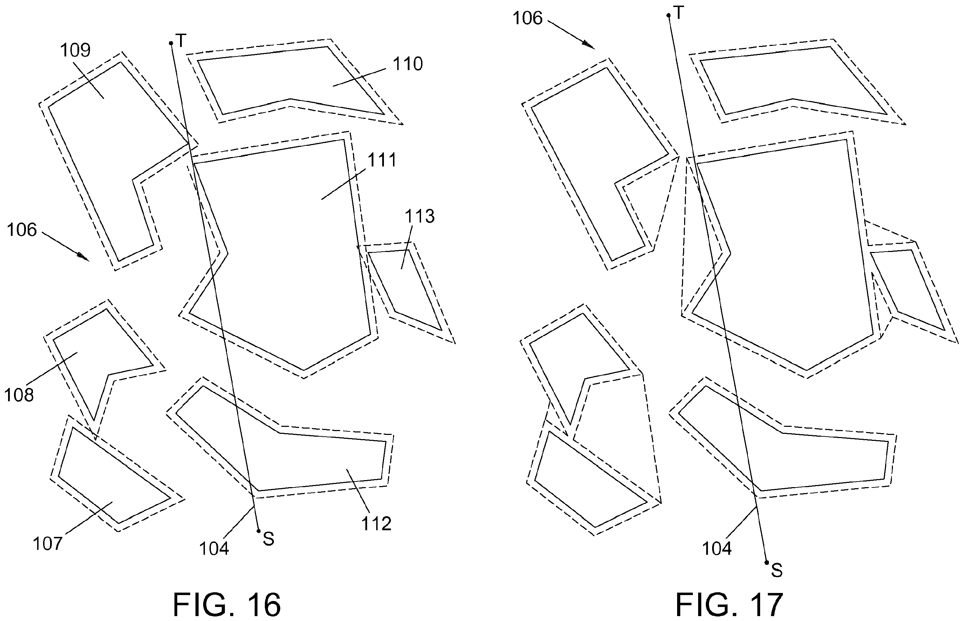

Figure 16 shows the simplified NFZ polygons (107-113) to which the safety area is added. The dashed line surrounding each NFZ (107-113) represents the safety area. Said safety area is defined by the PDF, the Linear Distance and the Turn Radius of the unmanned aircraft (105) and the Position Uncertainty introduced by the onboard navigation system. The safety areas of NFZs (107,108) and NFZs (111,113) overlap, so they are merged. Optionally, the method may cut bevel edges of any of the NFZ if needed. The convex hull algorithm is then applied finding the shortest path through the convex hull polygons' boundaries. Figure 17 shows the result of the convex hull algorithm application to the scenario (104). The safety area of merged NFZ (107,108), merged NFZ (111,113) and NFZ (109) is modified, see dashed-dotted line.

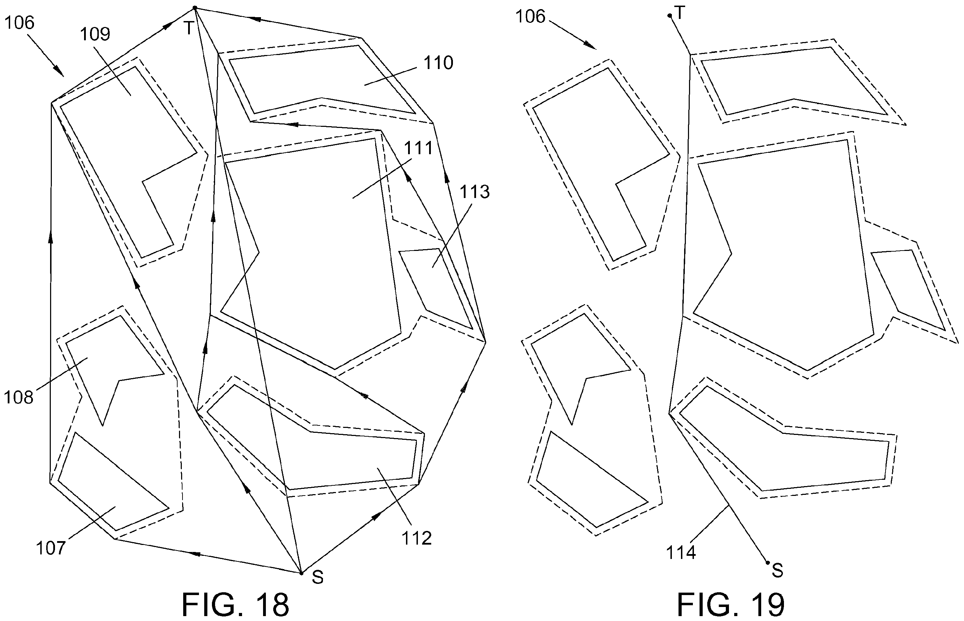

Figure 17 shows the NFZs with the resulting safety areas surrounding them. The method applies the Visibility Graph algorithm that identifies all likely geometric paths between the Source and Target points. All the geometric paths identified connect safety areas' vertices avoiding passing over any of the NFZs. Finally the method identifies the shortest lateral path (114) by applying the Dijkstra's algorithm, see Figure 19. The cartographic set of waypoints that defines the shortest path is translated into geodetic coordinates in order to define a geodetic pseudo-optimal shortest path that is sent to a trajectory generator of the unmanned aircraft. Finally, the unmanned aircraft (105) will fly the obtained geodetic shortest lateral path (114).

**Claims**

1. A system, comprising: memory storing computer readable code; and at least one processor to execute the computer readable code to cause the at least one processor to: access an initial scenario including a source point, a target point, and a no flight zone; determine a computation time for identifying a lateral path for an aircraft to traverse that avoids the no flight zone, the computation time being associated with a first number of vertices of the no flight zone; determine whether the determined computation time satisfies a threshold of a reference computation time; when the computation time does not satisfy the threshold of the reference computation time, change the first number of vertices of the no flight zone to a second number of vertices of the no flight zone to enable a subsequently determined computation time to satisfy the threshold; determine a buffer area surrounding the no flight zone, wherein the buffer area is defined by an offset distance from a perimeter of the no flight zone; construct a visibility graph including lateral paths between the source point and the target point, the lateral paths not passing through the no flight zone, the lateral paths connecting the first number of vertices or the second number of vertices of the no flight zone, the first number of vertices or the second number of vertices taking into account the buffer area; and identify a first lateral path of the lateral paths, the first lateral path being shorter than others of the lateral paths.

2. The system of claim 1, wherein when the initial scenario is defined in geodetic coordinates, further including converting the geodetic coordinates to cartographic coordinates.

3. The system of claim 2, wherein converting the geodetic coordinates to cartographic coordinates includes using a scale factor.

4. The system of claim 1, wherein the no flight zone includes a first no flight zone, further including a second no flight zone, and: defining a configuration space between the source point and the target point and bounded by a first line intersecting the source point and a second line intersecting the source point; and identifying the second no flight zone as being outside of the configuration space.

5. The system of claim 4, wherein the computation time is a first computation time, in response to identifying the second no flight zone as being outside of the configuration space, determining a second computation time for obtaining a second lateral path that avoids the first no flight zone, the determining not considering the second no flight zone.

6. The system of claim 5, wherein the buffer area is a first buffer area, the visibility graph is a first visibility graph, and the lateral paths are first lateral paths, in response to the second computation time satisfying the threshold of the reference computation time, further including computer readable code which, when executed, cause the at least one processor to: determine a second buffer area surrounding the first no flight zone; construct a second visibility graph including second lateral paths between the source point and the target point, the second lateral paths avoiding the first no flight zone; and identify a third lateral path of the second lateral paths, the third lateral path being shorter than others of the second lateral paths.

7. The system of claim 6, wherein the first lateral path is different from the third lateral path.

8. The system of claim 1, wherein changing the first number of vertices of the no flight zone includes applying a vertex reduction algorithm to the no flight zone.

9. The system of claim 8, wherein the vertex reduction algorithm includes at least one of a minimum Bounding Box algorithm or a linear simplification algorithm.

10. The system of claim 1, wherein the buffer area includes a first buffer area, further including modifying the first buffer area to reduce a size of the first buffer area to a second buffer area after identifying an angled portion of the first buffer area satisfying a threshold.

11. The system of claim 1, wherein the no flight zone includes a first no flight zone and a second no flight zone, the first no flight zone overlapping the second no flight zone.

12. The system of claim 11, further including computer readable code which, when executed, cause the at least one processor to merge the first and second no flight zones when the first no flight zone overlaps the second no flight zone.

INITIAL SCENARIO 1

HEURISTIC 2

PLANAR SCENARIO ?

YES

NO

GEODETIC LAYOUT TRANSFORMATION 3

ACCEPTABLE COMPUTATION TIME ?

NO

COMPLEXITY REDUCTION 4

YES

NFZ INCURSION AVOIDANCE 5

LATERAL PATH DEFINITION 6

**FIG. 1**

S & T 12

NFZs 13

ASSESMENT OF THE SCENARIO GEOMETRY 10

DEFINITION CARTOGRAPHIC PROJECTION 11

ESTIMATION COMPUTATION TIME 14

STRATEGY DEFINITION 15

**FIG. 2**

FIG. 3

FIG. 4

FIG. 5

49

SIMPLIFIED, OFFSET & MERGING
CARTOGRAFIC NFZ POLYGONS

IS ANY POINT INSIDE THE
CONVEX HULL AREA OF NFZ?

NO

50

APPLICATION OF
THE CONVEX HULL

51

YES

VISIBILITY GRAPH

52

DJISKTRA´S GRAPH ALGORITHM

53

CARTOGRAPHIC SET OF
WAYPOINTS OF THE PATH

TRASLATION TO GEODETIC COORDINATES

54

GEODETIC PATH DEFINED
BY WAYPOINTS

55

FIG. 6

FIG. 7a

FIG. 7b

FIG. 8a

FIG. 8b

FIG. 9

FIG. 10

FIG. 11

## FIG. 12a

## FIG. 12b

## FIG. 13

FIG. 14

FIG. 15

FIG. 17

FIG. 16

FIG. 19

FIG. 18